# EUROPÄISCHE PATENTSCHRIFT

(11) **EP 3 140 154 B1**
(45) Veröffentlichungstag und Bekanntmachung des Hinweises auf die Patenterteilung: **10.07.2019**
(21) Anmeldenummer: 15721197.0
(22) Anmeldetag: 04.05.2015
(51) Int. Cl.: B60N 2/10, B60N 2/12

(54) **ENTRIEGELUNGSHEBEL FÜR EINE SITZVERSTELLUNG EINES FAHRZEUGSITZES UND FAHRZEUGSITZ**
UNLOCKING LEVER FOR A SEAT ADJUSTER OF A VEHICLE SEAT AND VEHICLE SEAT
LEVIER DE DÉVERROUILLAGE SERVANT AU RÉGLAGE D'UN SIÈGE DE VÉHICULE ET SIÈGE DE VÉHICULE

(30) Priorität: 05.05.2014 DE 102014208342
(43) Veröffentlichungstag der Anmeldung: 15.03.2017
(73) Patentinhaber: Volkswagen Aktiengesellschaft, 38440 Wolfsburg (DE)
(72) Erfinder: SZLAG, Robert, 38440 Wolfsburg (DE); DÄNEKAS, Lars, 38527 Meine-Grassel (DE)
(86) Internationale Anmeldenummer: PCT/EP2015/059642
(87) Internationale Veröffentlichungsnummer: WO 2015/169715

(56) Entgegenhaltungen:
- EP-A1- 1 942 028
- JP-A- H0 811 606
- JP-A- 2008 001 139

## Beschreibung

Die Erfindung betrifft einen Entriegelungshebel für eine Sitzverstellung eines Fahrzeugsitzes und einen Fahrzeugsitz.

Zur Betätigung von Sitzverstellungen von Fahrzeugsitzen, beispielsweise von Kraftfahrzeugen wie PKWs, LKWs oder Bussen oder auch weiteren Fahrzeugen wie Flugzeugen, Schiffen oder Bahnen, sind üblicherweise Entriegelungshebel vorgesehen. Neben der technischen Ausgestaltung, insbesondere der Kraftübertragung zwischen Entriegelungshebel und Entriegelungsmechanismus, steht auch die Bedienungsergonomie im Mittelpunkt.

DE 10 2005 003 817 A1 beschreibt einen Kraftfahrzeugsitz mit vorklappbarer Rückenlehne, die mittels um eine Drehachse schwenkbar gelagerten Bedienungshebels und Übertragung durch einen Bowdenzug vorgeklappt werden kann.

DE 101 42 833 A1 beschreibt einen Antrieb für Verstelleinrichtungen an Fahrzeugsitzen, wobei ein schwenkbar in einer Drehachse gelagerter Antriebshebel als tunnelseitige Armstütze ausgebildet ist.

DE 20 2008 009 745 U1 beschreibt eine Betätigungseinrichtung zum Entriegeln einer Sitzrückenlehne mit einem hebelförmigen Betätigungselement, das über einen Bowdenzug auf den Entriegelungsmechanismus wirkt.

Die bekannten Lösungen sind nicht immer intuitiv zu bedienen, da das Ziehen oder Bewegen des Betätigungshebels bei einer Richtung der Verstellung entgegen der Verstellbewegung des Fahrzeugsitzes verläuft.

EP 1 942 028 A1 offenbart einen Sitz dessen Lehne und dessen Sitzkissen unabhängig voneinander verstellbar sind. Die Verstellung wird durch jeweils einen Hebel ermöglicht. Die beiden Hebel sind in einer gemeinsamen Hebeleinheit zusammengefasst, wobei ein Hebel für die Lehnenverstellung in den Hebel der Höhenverstellung integriert ist.

JP H08 11606 A beschreibt einen Entriegelungshebel für eine Sitzverstellung, welcher einen um eine erste Drehachse drehbaren ersten Hebel und einen um eine zweite Drehachse drehbaren zweiten Hebel umfasst.

Der Erfindung liegt nun die Aufgabe zugrunde, die Sitzverstellung eines Fahrzeugsitzes zu verbessern.

Diese Aufgabe wird gelöst mit einem Entriegelungshebel gemäß Anspruch 1 beziehungsweise einem Fahrzeugsitz nach Anspruch 8.

Der erfindungsgemäße Entriegelungshebel mit einer Halterung für ein Zugelement einer Sitzverstellung eines Fahrzeugsitzes sieht vor, dass der Entriegelungshebel einen um eine erste Drehachse drehbaren ersten Hebel und einen um eine zweite Drehachse drehbaren zweiten Hebel aufweist, wobei der erste und der zweite Hebel mittels der zweiten Drehachse gelenkig verbunden sind, und dass die Halterung für das Zugelement zwischen den beiden Drehachsen an dem zweiten Hebel angeordnet ist.

Der erfindungsgemäße Entriegelungshebel hat den Vorteil, dass der Entriegelungshebel dank der zwei Dreh- oder Kippachsen und den beiden Hebeln in zwei Betätigungsrichtungen betätigt werden kann. Diese beiden Richtungen entsprechen vorzugsweise der Fahrtrichtung des Fahrzeugs, in welchem der Sitz angeordnet ist. Auf eine Schwenkachse der Sitzverstellung bezogen, entsprechen die beiden Richtungen vorzugsweise einer Aufstellrichtung des Sitzes oder eines Sitzteiles und einer Rückstellrichtung des Sitzes oder eines Sitzteiles. Der Benutzer kann nun zwischen den beiden Hebeln und damit den Betätigungsrichtungen wählen und intuitiv die für ihn beste Betätigungsrichtung wählen. Dies erhöht den Komfort und minimiert die Möglichkeit einer Fehlbedienung. Die Erfindung ermöglicht so eine Sitzverstellung, mit welcher der Sitz oder ein Sitzteil parallel, das heißt in gleicher Richtung, zu dem Entriegelungshebel verstellt werden kann. Konkret kann ein Sitz in Fahrtrichtung mit einer Hebelbewegung in Fahrtrichtung bewegt werden und gegen die Fahrtrichtung mit einer Hebelbewegung gegen die Fahrtrichtung bewegt werden, was eine sehr fließende Bewegung ermöglicht.

In bevorzugter Ausgestaltung der Erfindung ist vorgesehen, dass der erste Hebel eine Ausnehmung für das Zugelement aufweist. Dies erlaubt eine mittige Anordnung des Zugelements, was sowohl den Bewegungsablauf als auch das optische Erscheinungsbild verbessert.

In weiterer bevorzugter Ausgestaltung der Erfindung ist vorgesehen, dass die Ausnehmung zur Aufnahme der Halterung für das Zugelement ausgebildet ist. Dadurch kann der zweite Hebel flach gehalten werden, was Material und Gewicht spart und zudem das optische Erscheinungsbild verbessert.

Besonders vorteilhaft ist, dass die Halterung an einer dem ersten Hebel zugewandten Seite des zweiten Hebels angeordnet ist. Dies verbessert die Hebelverhältnisse und das optische Erscheinungsbild, da die Halterung an der dem Bediener abgewandten Seite ausgebildet ist.

Die Längen der beiden Hebel können annähernd identisch sein. Dies schafft ein einheitliches Erscheinungsbild und bietet für beide Betätigungsrichtungen aufgrund gleicher oder zumindest ähnlicher Hebelverhältnisse in etwa die gleiche benötigte Bedienkraft zur Betätigung der Hebel. Alternativ können die Kräfte je nach Situation optimiert werden. So kann ein Hebel, der zum Aufstellen des Sitzes verwendet wird, kürzer sein als der andere Hebel, der dann vorzugsweise zum Rückstellen des Sitzes verwendet wird. Dies hat den Effekt, dass die Hebelbetätigung für das Zurückstellen im Vergleich zum Aufstellen erleichtert wird. So wird angepasst, dass das eher von außen und daher mit mehr Kraft vorgenommene Aufstellen und das eher von innen und mit weniger Kraft vorgenommene Zurückstellen nun von dem Bediener eine etwa identische Kraft erfordern. So können die Hebel beziehungsweise die Hebelverhältnisse an unterschiedliche Situationen angepasst werden.

Vorzugsweise ist vorgesehen, dass zwischen dem ersten und dem zweiten Hebel eine Griffmulde zur Betätigung des zweiten Hebels vorgesehen ist. Dazu sind einer oder beide Hebel entsprechend ausgeformt, was den Bedienkomfort erhöht ohne einer wertigen Optik abträglich zu sein.

Die beiden Drehachsen können parallel sein. Dies optimiert die Bewegungsabläufe und bietet erhöhten Bedienungskomfort, da die Schwenkbewegungen der beiden Hebel in gleicher Ausrichtung verlaufen. Weiter vorzugsweise sind die Drehachsen parallel zu einer Schwenk- oder Bewegungsachse der Sitzverstellung, was eine intuitive Bedienung ermöglicht.

Der erfindungsgemäße Fahrzeugsitz mit einer mit einem Zugelement betätigbaren Sitzverstellung umfasst einen Entriegelungshebel für die Sitzverstellung wie zuvor beschrieben. Es gelten die gleichen Vorteile und Modifikationen wie zuvor beschrieben.

In bevorzugter Ausgestaltung der Erfindung ist vorgesehen, dass die Sitzverstellung den gesamten Kraftfahrzeugsitz schwenkt. Diese umfassende und am schwersten zu betätigende Sitzverstellung ist prädestiniert für die vereinfachte Entriegelung gemäß der Erfindung. Selbstverständlich kann auch nur eine Rückenlehne oder ein Teil davon geschwenkt oder geneigt werden.

In weiterer bevorzugter Ausgestaltung der Erfindung ist vorgesehen, dass eine Ausnehmung zur Aufnahme der Halterung für das Zugelement ausgebildet ist. Dadurch können der erste und/oder der zweite Hebel flach gehalten werden, was Material und Gewicht spart und zudem das optische Erscheinungsbild verbessert.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen Entriegelungshebel in einer unbetätigten Position;
- Figur 2: den Entriegelungshebel in einer ersten Entriegelungsposition;
- Figur 3: den Entriegelungshebel in einer zweiten Entriegelungsposition;
- Figur 4: einen Fahrzeugsitz während der Aufstellens; und
- Figur 5: einen Fahrzeugsitz während der Rückstellens.

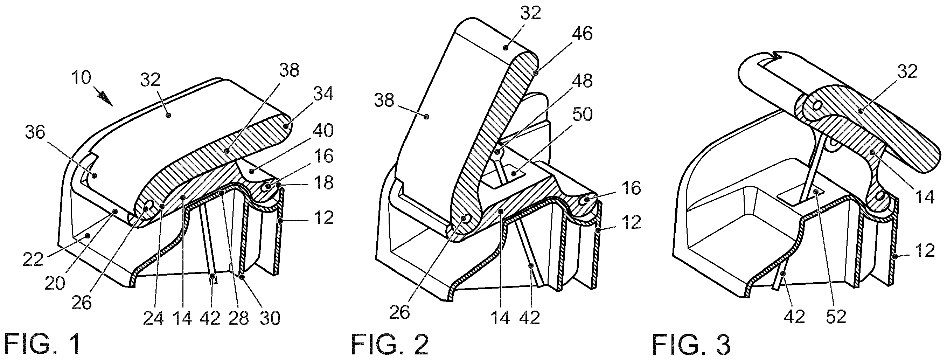

Figur 1 zeigt eine detaillierte Darstellung eines Entriegelungshebels 10 für eine hier nicht dargestellte Sitzverstellung eines Fahrzeugsitzes. Die Sitzverstellung kann als so genannte Easy-Entry-Funktion den gesamten Fahrzeugsitz verschwenken. Dies erfolgt üblicherweise als ein Aufstellen in Fahrtrichtung und ein Rückstellen des Sitzes entgegen der Fahrtrichtung des Fahrzeugs. Auch ist es möglich, mit dem Entriegelungshebel 10 einzelne Elemente des Sitzes, wie zum Beispiel die Rückenlehne oder ein Teil der Rückenlehne zu verstellen.

Der Entriegelungshebel 10 ist an einem Basisteil angeordnet, das zum Beispiel Bestandteil einer Gehäuseblende oder einer Sitzverkleidung sein kann. Der Entriegelungshebel 10 umfasst einen ersten Hebel 14, der drehbar um eine erste Drehachse 16 an dem Basisteil 12 befestigt ist. Die erste Drehachse 16 verläuft hier parallel zu einer Schwenkachse der Sitzverstellung. Hier in diesem Beispiel sind diese beiden Drehachsen quer zur Fahrtrichtung des Fahrzeugs angeordnet. Die erste Drehachse 16 ist im Bereich eines ersten Endes oder an einem ersten Ende 18 des ersten Hebels 14 angeordnet. In Bezug auf die Fahrtrichtung ist das erste Ende 18 hinten angeordnet, so dass der erste Hebel 14 in einer Betätigungsrichtung entgegen der Fahrtrichtung geschwenkt werden kann.

Gegenüber dem ersten Ende 18 hat der erste Hebel 14 ein zweites Ende 20. Gegenüber heißt hier, in einer radialen Richtung zu der ersten Drehachse 16. Zwischen einer dem Basisteil 12 zugewandten, hier unteren Seite des ersten Hebels 14 und einer Ausformung des Basisteils 12 ist eine Griffmulde 22 zur Betätigung des ersten Hebels 14 ausgebildet. Ein Benutzer kann in die Griffmulde 22 eingreifen, unter das zweite Ende 20 des ersten Hebels 14 fassen und diesen um die erste Drehachse 16 in einer aufstellenden Bewegung schwenken.

An dem zweiten Ende 20 des ersten Hebels 14 ist an einer dem Basisteil 12 abgewandten, hier oberen Seite, eine Ausnehmung 24 ausgebildet. In der Ausnehmung 24 ist eine zweite Drehachse 26 angeordnet. Die zweite Drehachse 26 verläuft parallel zu der ersten Drehachse 16. Hier ist die zweite Drehachse 26 fest in der Ausnehmung 24 befestigt. Alternativ kann die zweite Drehachse 26 rotatorisch bewegbar gelagert sein.

In einem zwischen dem ersten Ende 18 und dem zweiten Ende 20 beziehungsweise zwischen der ersten Drehachse 16 und der zweiten Drehachse 26 befindlichen mittleren Bereich 28 des ersten Hebels 14 liegt dieser an einer Anlage 30 des Basisteils 12 auf. Die Anlage 30 dient als Anschlag für den ersten Hebel 14, so dass dieser aus der in Figur 1 dargestellten Ruheposition oder Nulllage nur entgegen der Fahrtrichtung aufstellbar ist.

Auf der zweiten Drehachse 26 ist um diese drehbar ein zweiter Hebel 32 angeordnet. Der zweite Hebel 32 liegt auf dem ersten Hebel 14 derart auf, dass ein erstes Ende 34 des zweiten Hebels 32 oberhalb des ersten Endes 18 des ersten Hebels 14 angeordnet ist. Ein zweites Ende 36 des zweiten Hebels 32 ist im Bereich der zweiten Drehachse 26 angeordnet. Ein mittlerer Bereich 38 des zweiten Hebels 32 befindet sich zwischen dem ersten Ende 34 und dem zweiten Ende 36 des zweiten Hebels 32 beziehungsweise zwischen der ersten Drehachse 16 und der zweiten Drehachse 26.

Zwischen dem ersten Ende 18 des ersten Hebels 14 und dem ersten Ende 34 des zweiten Hebels 32 befindet sich eine Griffmulde 40. In diese Griffmulde 40 kann der Benutzer eingreifen und so den zweiten Hebel 32 anheben beziehungsweise aufstellen. Die Betätigungsrichtung des zweiten Hebels 32 ist hier mit der Fahrtrichtung des Fahrzeugs. Der zweite Hebel 32 ist auch ohne Griffmulde 40 zu betätigen, jedoch erleichtert diese die Bewegung beziehungsweise das Ergreifen des zweiten Hebels 32. Hier ist der erste Hebel 14 an seinem ersten Ende 18 verjüngt beziehungsweise abgewinkelt ausgeformt, um so die Griffmulde 40 zu bilden.

Es ist zu sehen, dass die beiden Hebel 14 und 32 in entgegengesetzten Richtungen betätigbar sind. Mit den beiden Hebeln 14 und 32 kann ein Zugelement 42 der Sitzverstellung betätigt werden. Das Zugelement 42 kann beispielsweise eine Zugstange sein, die mit einem Bowdenzug der Sitzverstellung in Verbindung steht oder das Zugelement 42 kann direkt der Bowdenzug sein. Die Befestigung und Betätigung des Zugelementes 42 wird in den Figuren 2 und 3 detailliert erläutert.

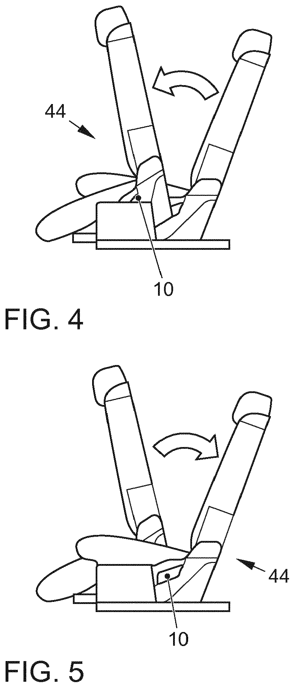

Anhand der Figuren 2 und 4 wird nun die Aufstellung eines Fahrzeugsitzes 44 beschrieben. Dazu wird der zweite Hebel 32 betätigt. An einer dem ersten Hebel 14 zugewandten, hier unteren Seite 46 des zweiten Hebels 32 ist eine Halterung 48 für das Zugelement 42 angeordnet. Die Halterung 48 befindet sich in dem mittleren Bereich 38 des zweiten Hebels 32, also zwischen der ersten Drehachse 16 und der zweiten Drehachse 26. Weiterhin befindet sich die Halterung 48 in einer axialen Richtung der Drehachsen 16 und 26 in etwa in der Mitte des zweiten Hebels 32. Alternativ kann die Halterung 48 auch seitlich an dem zweiten Hebel 32 angeordnet sein.

In dem ersten Hebel 14 ist eine Ausnehmung 50, beispielsweise eine Öffnung oder ein Durchgangsloch ausgebildet. Die Ausnehmung 50 korrespondiert zu der Halterung 48 und erlaubt einen Durchgang des Zugelements 42 und/oder eine Aufnahme der Halterung 48. So kann mit einer Betätigung des zweiten Hebels 32 das Zugelement 42 unabhängig vom ersten Hebel 14 bewegt werden.

Wird nun der zweite Hebel 32 in der dargestellten Weise in Fahrtrichtung aufgestellt, so wird das Zugelement 42 gezogen, was zu einer Aktivierung der Sitzverstellung führt. Wie in Figur 4 dargestellt, wird nun der Sitz zur Bereitstellung einer Einstiegsfunktion aufgestellt. Dabei wird der Sitz 44 ebenfalls in Fahrtrichtung bewegt. Somit ist die Betätigungsrichtung des zweiten Hebels 32 gleich der Verstellrichtung des Sitzes 44, was eine intuitive Bedienung erlaubt.

Die Längen der beiden Hebel 14 und 32 sind identisch oder zumindest annähernd identisch, was ausgeglichene Hebelverhältnisse erlaubt. Als Länge kann hier die Erstreckung vom jeweils ersten zum jeweils zweiten Ende oder der Abstand von der jeweiligen den Hebel haltenden Drehachse bis zum gegenüberliegenden Ende verstanden werden.

Der Entriegelungshebel 10 ist, wie dargestellt, in einem seitlichen unteren Bereich des Fahrzeugsitzes 44 angeordnet. Alternativ ist es möglich, den Entriegelungshebel 10 im Bereich der Rückenlehne auch weiter oben anzuordnen.

Anhand der Figuren 3 und 5 wird nun das Rückstellen des Sitzes aus der Einstiegsfunktion zurück in die Sitzfunktion beschrieben. Für die Rückstellung des Sitzes 44 wird nun der erste Hebel 14, wie dargestellt, in einer Richtung entgegen der Fahrtrichtung betätigt. Dabei nimmt der erste Hebel 14 den zweiten Hebel 32 mit. Da an dem zweiten Hebel 32 die Halterung 48 für das Zugelement 42 angeordnet ist, betätigt auch eine Aufstellung des ersten Hebels 14 das Zugelement 42 und damit die Sitzverstellung. Wie in Figur 3 zu sehen ist, erstreckt sich die Halterung 48 auch durch die Ausnehmung 50 des ersten Hebels 14. Entsprechend ist in dem Basisteil 12 eine weitere korrespondierende Ausnehmung 52 ausgebildet, durch welche das Zugelement 42 verläuft und/oder welche die Halterung 48 aufnimmt, so dass die beiden Hebel 14 und 32 relativ dünn ausgebildet sein können und glatt aufeinander liegen.

Zur Rückstellung des Sitzes wird der Entriegelungshebel 10, hier speziell der erste Hebel 14, entgegen der Fahrtrichtung bewegt. Wie in Figur 5 zu sehen ist, stimmt dies mit der Verstellrichtung des Fahrzeugsitzes 44, der ebenfalls entgegen der Fahrtrichtung zurückgestellt wird, überein. Somit ist auch für die Rückstellung eine intuitive Bedienung möglich.

Durch die Zweiteilung des Entriegelungshebels 10 in den ersten Hebel 14 und den zweiten Hebel 32 kann die Betätigungsrichtung des Entriegelungshebels 10 mit der Verstellrichtung des Fahrzeugsitzes 44 jeweils übereinstimmen, was eine intuitive Bedienung ermöglicht. Zudem hat der Benutzer die Möglichkeit, die Betätigungsrichtung des Entriegelungshebels 10 frei zu wählen, da beide Hebel 14 und 32 das Zugelement 42 in die gleiche Richtung und zumindest um etwa den gleichen Betrag bewegen. So kann der Benutzer das Aufstellen des Fahrzeugsitzes, was in Figur 4 dargestellt ist, auch durch Betätigung des ersten Hebels 14, wie in Figur 3 dargestellt, erreichen. Entsprechend kann ein Rückstellen des Sitzes 44, wie in Figur 5 dargestellt, auch durch Betätigung des zweiten Hebels 32, wie in Figur 2 dargestellt, erreicht werden. Der Entriegelungshebel 10 erlaubt somit eine völlig flexible Bedienung der Sitzverstellung des Fahrzeugsitzes 44.

### Bezugszeichenliste

- 10: Entriegelungshebel
- 12: Basisteil
- 14: erster Hebel
- 16: erste Drehachse
- 18: erstes Ende
- 20: zweites Ende
- 22: Griffmulde
- 24: Ausnehmung
- 26: zweite Drehachse
- 28: mittlerer Bereich
- 30: Anlage
- 32: zweiter Hebel
- 34: erstes Ende
- 36: zweites Ende
- 38: mittlerer Bereich
- 40: Griffmulde
- 42: Zugelement
- 44: Fahrzeugsitz
- 46: zugewandte Seite
- 48: Halterung
- 50: Ausnehmung
- 52: Ausnehmung

## Patentansprüche

1. Entriegelungshebel mit einer Halterung (48) für ein Zugelement (42) einer Sitzverstellung eines Fahrzeugsitzes (44), wobei der Entriegelungshebel (10) einen um eine erste Drehachse (16) drehbaren ersten Hebel (14) und einen um eine zweite Drehachse (26) drehbaren zweiten Hebel (32) aufweist, **dadurch gekennzeichnet, dass** der erste (14) und der zweite (32) Hebel mittels der zweiten Drehachse (26) gelenkig verbunden sind, der Entriegelungshebel (10) in zwei Betätigungsrichtungen betätigbar ist, und dass die Halterung (48) für das Zugelement (42) zwischen den beiden Drehachsen (16, 26) an dem zweiten Hebel (32) angeordnet ist.

2. Entriegelungshebel nach Anspruch 1, **dadurch gekennzeichnet, dass** der erste Hebel (14) eine Ausnehmung (50) für das Zugelement (42) aufweist.

3. Entriegelungshebel nach Anspruch 2, **dadurch gekennzeichnet, dass** die Ausnehmung (50) zur Aufnahme der Halterung (48) für das Zugelement (42) ausgebildet ist.

4. Entriegelungshebel nach einem der vorstehenden Ansprüche, **dadurch gekennzeichnet, dass** die Halterung (48) an einer dem ersten Hebel (14) zugewandten Seite des zweiten Hebels (32) angeordnet ist.

5. Entriegelungshebel nach einem der vorstehenden Ansprüche, **dadurch gekennzeichnet, dass** die Längen der beiden Hebel (14, 32) annähernd identisch sind.

6. Entriegelungshebel nach einem der vorstehenden Ansprüche, **dadurch gekennzeichnet, dass** zwischen dem ersten (14) und dem zweiten (32) Hebel eine Griffmulde (40) zur Betätigung des zweiten Hebels (32) vorgesehen ist.

7. Entriegelungshebel nach einem der vorstehenden Ansprüche, **dadurch gekennzeichnet, dass** die beiden Drehachsen (16, 26) parallel sind.

8. Kraftfahrzeugsitz mit einer mit einem Zugelement (42) betätigbaren Sitzverstellung, **dadurch gekennzeichnet, dass** ein Entriegelungshebel (10) für die Sitzverstellung nach einem der Ansprüche 1 bis 7 vorgesehen ist.

9. Kraftfahrzeugsitz nach Anspruch 8, **dadurch gekennzeichnet, dass** die Sitzverstellung den gesamten Kraftfahrzeugsitz (44) schwenkt.

10. Kraftfahrzeugsitz nach Anspruch 8, **dadurch gekennzeichnet, dass** eine Ausnehmung (52) zur Aufnahme der Halterung (48) für das Zugelement (42) ausgebildet ist.

## Claims

1. An unlocking lever having a holder (48) for a traction element (42) of a seat adjuster of a vehicle seat (44), wherein the unlocking lever (10) has a first lever (14) which can be rotated about a first rotational axis (16) and a second lever which can be rotated about a second rotational axis (26), **characterized in that** the first (14) and the second (32) lever are interconnected by means of the second rotational axis (26) in an articulated manner, the unlocking lever (10) can be actuated in two actuation directions, and that the holder (48) for the traction element (42) is arranged between the two rotational axes (16, 26) on the second lever (32).

2. An unlocking lever according to Claim 1, **characterized in that** the first lever (14) has a recess (50) for the traction element (42).

3. An unlocking lever according to Claim 2, **characterized in that** the recess (50) is designed for accommodating the holder (48) for the traction element (42).

4. An unlocking lever according to any one of the preceding claims, **characterized in that** the holder (48) is arranged on a side of the second lever (32) facing the first lever (14).

5. An unlocking lever according to any one of the preceding claims, **characterized in that** the lengths of the two levers (14, 32) are approximately identical.

6. An unlocking lever according to any one of the preceding claims, **characterized in that** between the first (14) and the second (32) lever a recessed grip (40) is provided for the actuation of the second lever (32).

7. An unlocking lever according to any one of the preceding claims, **characterized in that** the two rotational axes (16, 26) are parallel.

8. A vehicle seat with a seat adjuster which can be actuated with a traction element (42), **characterized in that** an unlocking lever (10) is provided for the seat adjuster according to any one of Claims 1 to 7.

9. A vehicle seat according to Claim 8, **characterized in that** the seat adjuster pivots the entire vehicle seat (44).

10. A vehicle seat according to Claim 8, **characterized in that** a recess (52) is formed for accommodating the holder (48) for the traction element (42).

## Revendications

1. Levier de déverrouillage avec un support (48) pour un élément de traction (42) d'un réglage de siège de véhicule (44), le levier de déverrouillage (10) comprenant un premier levier (14) rotatif autour d'un premier axe de rotation (16) et un deuxième levier (32) rotatif autour d'un deuxième axe de rotation (26), **caractérisé en ce que** les premier (14) et deuxième (32) leviers sont reliés de manière articulée au moyen du deuxième axe de rotation (26), le levier de déverrouillage (10) peut être actionné dans deux directions d'actionnement et **en ce que** le support (48) pour l'élément de traction (42) est disposé entre les deux axes de rotation (16, 26) au niveau du deuxième levier (32).

2. Levier de déverrouillage selon la revendication 1, **caractérisé en ce que** le premier levier (14) comprend un évidement (50) pour l'élément de traction (42).

3. Levier de déverrouillage selon la revendication 2, **caractérisé en ce que** l'évidement (50) est conçu pour le logement du support (48) pour l'élément de traction (42).

4. Levier de déverrouillage selon l'une des revendications précédentes, **caractérisé en ce que** le support (48) est disposé au niveau d'un côté, orienté vers le premier levier (14), du deuxième levier (32).

5. Levier de déverrouillage selon l'une des revendications précédentes, **caractérisé en ce que** les longueurs des deux leviers (14, 32) sont approximativement identiques.

6. Levier de déverrouillage selon l'une des revendications précédentes, **caractérisé en ce que**, entre le premier (14) et le deuxième (32) levier, est prévue une poignée encastrée (40) pour l'actionnement du deuxième levier (32).

7. Levier de déverrouillage selon l'une des revendications précédentes, **caractérisé en ce que** les deux axes (16, 26) sont parallèles.

8. Siège de véhicule avec un réglage de siège pouvant être actionné avec un élément de traction (42), **caractérisé en ce qu'**un levier de déverrouillage (10) pour le réglage de siège selon l'une des revendications 1 à 7 est prévu.

9. Siège de véhicule selon la revendication 8, **caractérisé en ce que** le réglage de siège fait pivoter l'ensemble du siège de véhicule (44).

10. Siège de véhicule selon la revendication 8, **caractérisé en ce qu'**un évidement (52) est conçu pour le logement du support (48) pour l'élément de traction (42).
